# EUROPEAN PATENT APPLICATION

(11) **EP 4 520 211 A1**
(43) Date of publication of application: **12.03.2025**
(21) Application number: 24198569.6
(22) Date of filing: 05.09.2024
(51) Int. Cl.: A42B 3/04

(54) **IDENTIFICATION FRIEND OR FOE APPARATUS**

(30) Priority: 07.09.2023 US 202363537144 P
(71) Applicant: Wilcox Industries Corp., Newington, NH 03801 (US)
(72) Inventor: TEETZEL,, James W., Newington, 03801 (US); Turner, Elliott S., Newington, 03801 (US)
(74) Representative: FRKelly

(57) **Abstract**

Disclosed is an identification friend or foe (IFF) device (100) including a housing (104) having a plurality of emitters (128a,128b,128c) configured to provide an identification friend or foe visual indication. The housing (104) is configured for detachable attachment to a helmet (108). A circuit substrate (140) includes a connector terminal (144) which is exterior of the housing (104), the connector terminal (144) configured to operatively couple the IFF device (100) to a helmet-based control system associated with the helmet (108).

## Description

### CROSS REFERENCE TO RELATED APPLICATION

This application claims the priority benefit of U.S. provisional application no. 63/537,144 filed September 7, 2023. The aforementioned application is incorporated herein by reference in its entirety.

### BACKGROUND

The present disclosure relates generally to helmet accessory devices and, more particularly, to a helmet-mounted friend or foe identification (IFF) marker device that can be worn on a user's helmet to visually identify friendly forces during nighttime or low visibility conditions.

In various operational scenarios, reliable identification of friendly forces is of paramount importance to prevent friendly fire incidents and enhance situational awareness. IFF marker devices play a crucial role in addressing this concern by providing a means of visually distinguishing between friendly and non-friendly entities. Such devices emit specific light signals characterized by unique wavelength and/or modulation patterns, enabling accurate identification by personnel equipped with compatible sensors and imaging systems, thereby reducing the risks associated with misidentification of personnel and increasing operational effectiveness.

Commonly, helmet-mounted IFF marker devices comprise a housing having emitters to allow for differentiation between friendly and unidentified entities. Power for such conventional IFF marker devices is typically provided by an on-board power supply, such as one or more batteries received within a battery compartment in the device's housing of the IFF device. While a dedicated power supply allows for standalone use, it also increases the overall weight, size, or profile of the device. The present development provides an improved IFF device which overcomes these problems and others.

One advantage of the present development is that it provides an IFF device that is capable of operating on a power supply from a remote source, such as a powered helmet accessory mount system.

Another advantage of the present invention is that it provides an IFF device that is capable of communicating with a helmet-based control system.

Still further advantages and benefits will become apparent to persons skilled in the art upon reading and understanding the present disclosure.

### SUMMARY

In one aspect, an identification friend or foe (IFF) device comprises a housing having a plurality of emitters configured to provide an identification friend or foe visual indication, the housing configured for detachable attachment to a helmet. A circuit substrate comprises a connector terminal which is exterior of the housing, wherein the connector terminal is configured to operatively couple the IFF device to a helmet-based control system associated with the helmet.

In a more limited aspect, a portion of the circuit substrate is a flexible.

In another more limited aspect, the flexible portion of the circuit substrate is received within a groove formed within the housing.

In another more limited aspect, the groove is configured to receive a strap for securing the IFF device to the helmet.

In another more limited aspect, the groove is aligned with a sagittal centerline of the helmet when the IFF device is attached to the helmet.

In another more limited aspect, a portion of the circuit substrate is disposed beneath the strap and the connector terminal extends from beneath the strap when the IFF device is attached to the helmet.

In another more limited aspect, the connector terminal includes electrical connectors configured to transmit one or more of power, data, and control signals between the IFF device and the helmet-based control system when the IFF device is operatively coupled to the helmet-based control system.

In another more limited aspect, the plurality of emitters are configured to be controlled by the helmet-based control system.

In another more limited aspect, the plurality of emitters comprise a plurality of light emitting diodes (LEDs).

In another more limited aspect, the plurality of emitters comprises one or more first emitters configured to configured to emit light at a first wavelength and one or more second emitters configured to configured to emit light at a second wavelength.

In another more limited aspect, the plurality of emitters further comprises one or more third emitters configured to emit light at a third wavelength.

In another more limited aspect, the first wavelength is within a wavelength range corresponding to visible light, the second wavelength is within a wavelength range corresponding to near infrared (NIR) light, and the third wavelength is within a wavelength range corresponding to short wave infrared (SWIR) light.

In another more limited aspect, the plurality of emitters further comprises one or more fourth emitters configured to emit light at a fourth wavelength.

In another more limited aspect, the fourth wavelength is within a wavelength range corresponding to mid-wave infrared (MWIR) light.

In another more limited aspect, the plurality of emitters comprises a plurality or first emitters configured to configured to emit light at a first wavelength, a plurality of second emitters configured to configured to emit light at a second wavelength, and a plurality of third emitters configured to emit light at a third wavelength.

In another more limited aspect, the plurality of emitters are spaced about at least a portion of a periphery of the housing to enhance visibility of a wearer of the device from multiple directions.

In another more limited aspect, the IFF device further comprises an optical sensor configured to detect a presence of a laser beam.

In another more limited aspect, the plurality of emitters are configured to generate an optical output responsive to detecting the presence of the laser beam.

In another more limited aspect, the IFF device further comprises means for calculating a direction of arrival of the laser beam.

In another more limited aspect, the direction of arrival is selected from one or both of an azimuth angle and an elevation angle.

In a further aspect, a kit of components usable together comprises the IFF device in accordance with this disclosure in combination with the helmet-based control system.

In a further aspect, the helmet-based control system comprises a program of instructions configured for one or more of providing an audio warning to a wearer of the device, communication with an end user device, and communication via a satellite radio.

### BRIEF DESCRIPTION OF THE DRAWINGS

FIG. 1 is a top plan view of an IFF device in accordance with an exemplary embodiment of the present invention.
FIG. 2 is an isometric view of the IFF device appearing in FIG. 1 in combination with a helmet and a helmet-based control system, taken generally from the front and left side.
FIG. 3 is an isometric view of the system appearing in FIG. 2 with the helmet removed for illustration purposes.
FIG. 4 is an isometric view of the system appearing in FIG. 2, taken generally from the rear and right side.
FIG. 5 is an isometric view of the system appearing in FIG. 4 with the helmet removed for illustration purposes.
FIG. 6 is a top plan view of the system appearing in FIG. 2.
FIG. 7 is a top plan view of the system appearing in FIG. 6 with the helmet removed for illustration purposes.

### DETAILED DESCRIPTION OF THE PREFERRED EMBODIMENT(S)

Detailed embodiments of the present development are disclosed herein; however, it is to be understood that the disclosed embodiments are merely exemplary of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development.

As used herein, the term "light" refers to electromagnetic radiation that falls within a broad spectrum, including but not limited to visible light, ultraviolet (UV) light, infrared (IR) light, and any other wavelengths of electromagnetic radiation. The term encompasses all types of radiation within the electromagnetic spectrum that can be emitted, transmitted, or detected, regardless of whether the wavelengths are within the range visible to the human eye or outside it.

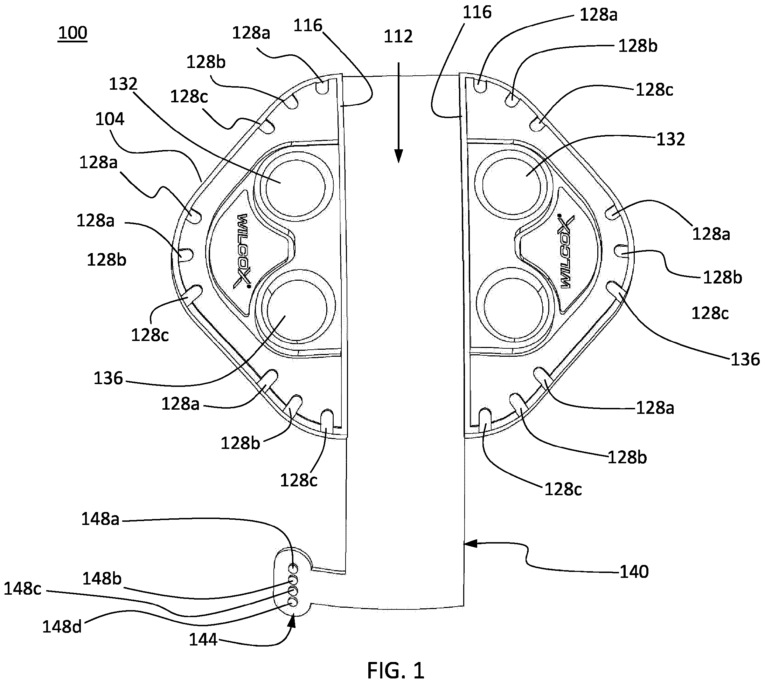

Referring now to the drawings, FIG. 1 depicts an identification friend foe (IFF) marker device, which is designated generally as reference numeral **100.** The IFF device **100** according to the present disclosure comprises a housing **104** that is configured to be detachably installed on the exterior surface of a helmet **108.** The helmet **108** may be a military or tactical field helmet, ballistic helmet, or the like.

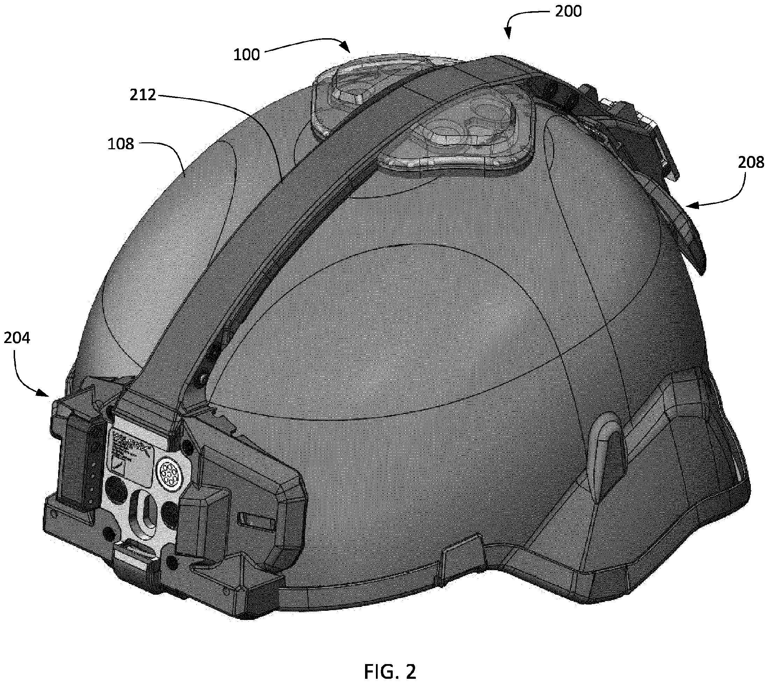

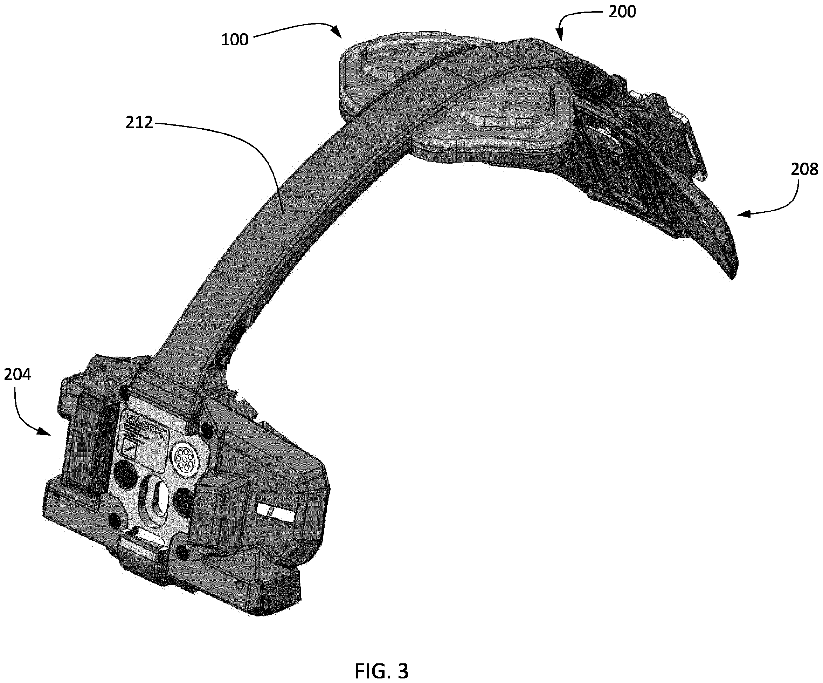

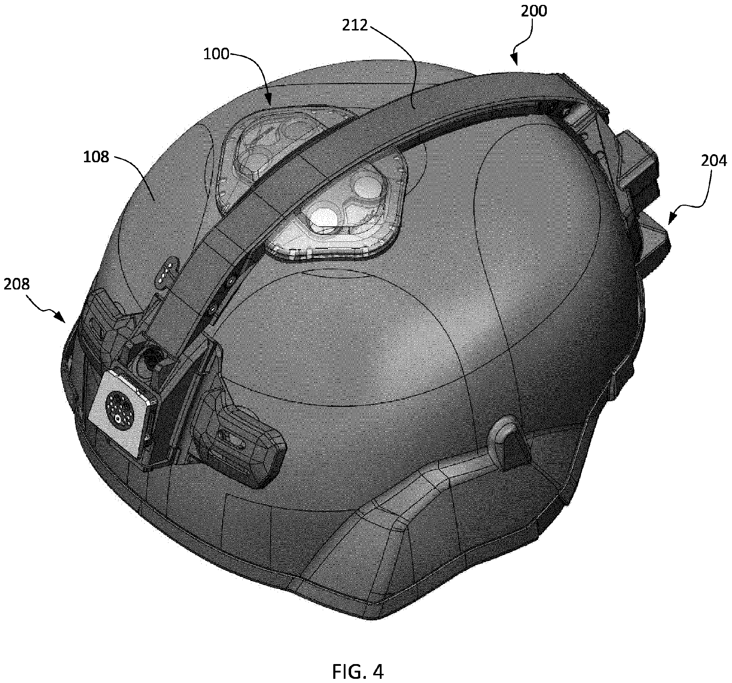

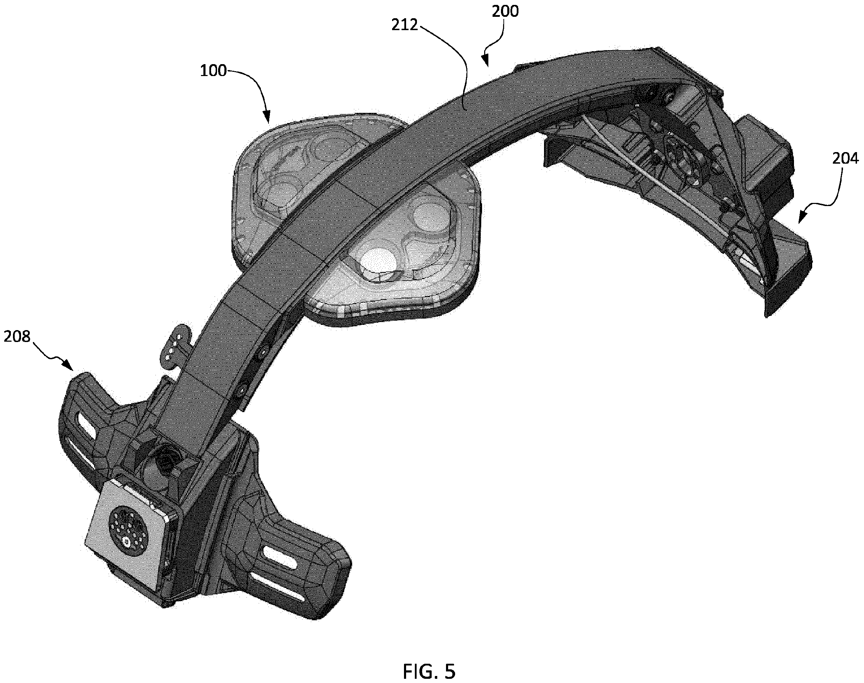

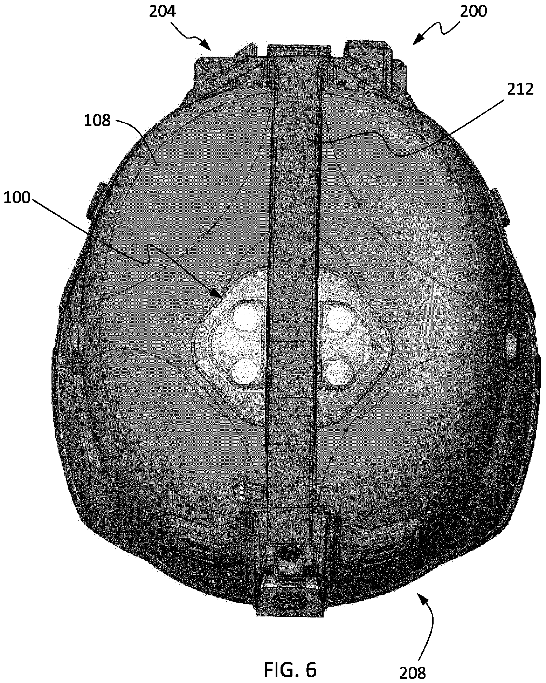

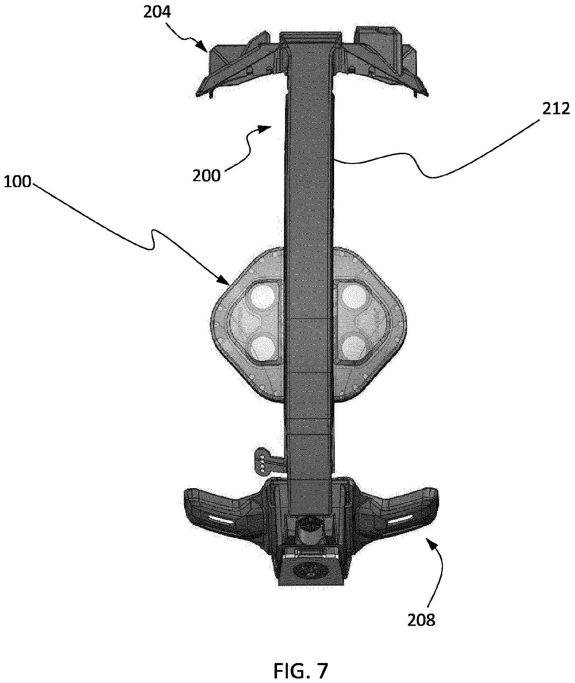

In the illustrated embodiment, the housing **104** includes a channel **112** defined by sidewalls **116** and which is configured to receive a strap portion **212** of a powered helmet accessory mount assembly **200** (see FIGS. 2-7). The strap portion **212** runs from the front of the helmet **104** to the rear of the helmet **104** along a centerline of the helmet **104,** e.g., a sagittal midline, and serves to secure the IFF device **100** to the helmet. In embodiments, the IFF device **100** is configured to be positioned at or near the crown of the helmet **104.** Positioning the IFF device **100** at or near the crown of the helmet **104** advantageously provides 360 degree visibility and an unobstructed line of sight viewing in all directions from both ground-based and aerial viewpoints, as well as ease of accessibility by the wearer.

The IFF device **100** includes a plurality of marker emitters, preferably light emitting diode (LED emitters). In the depicted embodiment, the emitters include six visible LED emitters **128a,** six near infrared (NIR) LED emitters **128b,** and six short wave infrared (SWIR) (e.g., 1550 nm) LED emitters **128c,** which are spaced about the periphery of the housing **104** to provide visibility from all directions.

The IFF device **100** further includes mid-wave infrared (MWIR) beacon emitters **136** and optical receivers or sensors **132.** In embodiments, the mid-wave infrared beacon emitters **136** are configured to provide visibility on mid-wave infrared targeting sensors, such as aircraft mid-wave infrared targeting sensors. In embodiments, the mid-wave infrared beacon emitters **136** are configured to emit at a wavelength of 3-5 microns. In embodiments, the sensors **132** comprise one or more electromagnetic radiation sensors, including but not limited to charge-coupled device (CCD) sensors, complementary metal-oxide-semiconductor (CMOS) arrays, photodiodes, or other suitable sensor for detecting incident light.

The IFF device **100** includes a circuit substrate, including a flexible circuit portion **140** received within the channel **112** and having circuit components thereon. The flexible portion **140** may be formed of, for example, a flexible polymer film. The flexible circuit portion **140** includes a connector terminal portion **144** having a plurality of electrical contacts **148a-148d** disposed thereon which are coupled to conductors for power, ground, and data and control signals. The connector terminal portion **144** is configured to engage with a complementary terminal or connector portion on a helmet-based control system to operably couple the IFF device **100** thereto.

As used herein, the term "helmet-based control system" means a processor-based platform designed to facilitate interaction and control of electronic devices or equipment by integrating with a helmet worn by a user. Such systems may employ one or more sensors, interfaces, and communication protocols to provide a shared interface for accessory devices that are interfaced or networked with the helmet to enable the transmission of power, data, and control signals between the helmet-based control system and the connected devices.

In embodiments, the electrical contacts **148a-148d** are contact pads configured to engage electrical pins, e.g., spring loaded or pogo pin contacts on the helmet-based control system. In this manner, the user can activate the emitters on the IFF device **100** via the helmet-based control system and any computer-based controller devices that are networked to the helmet-based control system. In embodiments, the helmet-based control system has an open architecture of which allows third parties to develop modules or cassettes to program the IFF device **100** to use custom profiles and handoffs with other systems. In embodiments, power to operate the IFF device **100** is provided by a battery or battery pack on the helmet-based control system thereby eliminating the need for a dedicated power supply on the IFF device **100.**

The optical receivers **132** are operable to detect an optical signal. In embodiments, the optical receivers **132** are configured to receive optical interrogation signals, e.g., consisting of a specific pattern of light pulses or signals in the optical spectrum. When an optical interrogation signal is detected by the optical receiver **132,** the IFF device **100** is configured to generate a pre-programmed optical response in return. In embodiments, the optical receivers **132** are accessible to the modules for programing, thereby allowing the IFF device **100** to be adapted or customized to suit specific needs or preferences.

In embodiments, the optical receivers **132** are configured to detect and alert users when a laser is being pointed at the user. For example, a laser being pointed at the user could be an indication that the user is being "painted," i.e., designated as a potential target, by a laser device, such as a laser designator, rangefinder, or laser-guided weapon. By interfacing the IFF device **100** to a helmet-based control system, the helmet-based control system can be programmed to provide an audio warning to the user via an associated helmet audio system if the optical receivers **132** detect a laser pointed at the wearer.

In embodiments, the optical receivers **132** are directional sensors configured for sensing an intensity and direction of arrival of incident laser beams. In certain embodiments, the optical receivers **132** comprise a generally circular sensor array configured to provide an azimuth angle of an incoming signal. In certain embodiments, the optical receivers **132** comprise a generally hemispherical sensor array configured to provide an azimuth angle and elevation angle of an incoming signal. In certain embodiments, the sensors **132** may include means for enhancing angular resolution or accuracy, such as collimators, aperture grids, slit arrays, or similar optical elements.

In certain embodiments, the output from the sensors **132** is transmitted to the helmet-based control system for processing. In embodiments, the unit **100** and/or the helmet-based control system includes processing electronics configured to receive and process the sensor data. The processing electronics may be implemented in hardware, software, firmware, or a combination thereof, and may comprise one or more analog-to-digital converters (ADCs) and digital signal processors (DSPs) to perform the necessary computations to determine the direction of arrival of incident rays impinging on the sensors **132.**

In certain embodiments, the helmet-based control system is configured to determine the direction of arrival of incident rays in relation to the helmet **108** and combines the relative direction arrival with information about the orientation of the helmet **108.** For example, the orientation of the helmet **108** can be determined using one or more additional sensors for monitoring position and movement of the helmet **108** such as one or more accelerometers or inertial measurement units (IMUs). By integrating the relative direction of arrival of incident rays impinging on the sensors **132** with helmet orientation data, an absolute direction of arrival of incident rays can be determined.

The detection of incident light by the sensors **132** may indicate the presence of a potential threat. In certain embodiments, the helmet-based control system can signal the detection of a threat based on the sensor's output, even without estimating the direction of arrival of the incident light. This basic threat detection capability allows for providing an initial alert to the user and/or communicating an alert to others to allow for a timely response to the potential threat.

In further embodiments, wherein the helmet-based control system additionally detects direction of arrival information, the helmet-based control system can determine the direction or location of the threat relative to the user. This enhanced capability allows for improved situational awareness, improved threat localization, more precise tracking and targeting, and more informed decision making and response strategies. The threat detection information (with or without direction of arrival information) may be output to the user, e.g., via an audible alert, or communicated to a networked device, such as an end user device (EUD). Exemplary EUDs include smartphones, handheld computers, hand held data terminals, smart watches, augmented reality (AR) glasses and other wearable devices, tablets, personal digital assistants (PDAs), vehicle displays or vehicle information systems, drones or other unmanned aerial vehicles (UAVs), and the like.

In embodiments, the helmet-based control system is programmed to use such information to trigger one or more programs stored on the helmet-based control system or other attached or coupled device, notify other networked devices such as an EUD to warn others via one or more team awareness tools, such as iPhone Team Awareness Kit (iTAK), Android Team Awareness Kit (ATAK), or the like, or communicate through a satellite radio. As an example, in operation, if a user is designated with a laser, the optical receiver **132** in the IFF device **100** triggers the helmet-based control system to send a notification, with or without direction of arrival information, via a team awareness tool to the user's operational command which contains, e.g., the user's GPS coordinates, heading, and elevation and, optionally, directional information or location information of the potential threat.

Referring now to FIGS. 2-7, and with continued reference to FIG. 1, the IFF device **100** is disposed atop the helmet **108** having a helmet-based control system **200.** The helmet-based control system **200** includes a front shroud portion **204** configured to receive a front helmet mount accessory device (not shown). A rear battery mounting bracket **208** is disposed at the rear of the helmet. The strap **212** extends between the front shroud portion **204** and the rear battery bracket portion **208.** The strap **212** passes through the channel **112** in the IFF device **100** to secure the unit **100** to the helmet **108.**

The invention has been described with reference to the preferred embodiments. Modifications and alterations will occur to others upon a reading and understanding of the preceding detailed description. It is intended that the invention be construed as including all such modifications and alterations insofar as they come within the scope of the appended claims or the equivalents thereof.

## Claims

1. An identification friend or foe (IFF) device comprising:
a housing having a plurality of emitters configured to provide an identification friend or foe visual indication, the housing configured for detachable attachment to a helmet; and
a circuit substrate comprising a connector terminal which is exterior of the housing, the connector terminal configured to operatively couple the IFF device to a helmet-based control system associated with the helmet.

2. The IFF device of claim 1, wherein a portion of the circuit substrate is a flexible.

3. The IFF device of claim 1 or claim 2, wherein the flexible portion of the circuit substrate is received within a groove formed within the housing.

4. The IFF device of claim 3, wherein the groove is configured to receive a strap for securing the IFF device to the helmet.

5. The IFF device of claim 4, wherein the groove is aligned with a sagittal centerline of the helmet when the IFF device is attached to the helmet.

6. The IFF device of claim 4 or claim 5, wherein a portion of the circuit substrate is disposed beneath the strap and wherein the connector terminal extends from beneath the strap when the IFF device is attached to the helmet.

7. The IFF device of any of the preceding claims, wherein the connector terminal includes electrical connectors configured to transmit one or more of power, data, and control signals between the IFF device and the helmet-based control system when the IFF device is operatively coupled to the helmet-based control system.

8. The IFF device of claim 7, wherein the plurality of emitters are configured to be controlled by the helmet-based control system.

9. The IFF device of any of the preceding claims, wherein the plurality of emitters comprises a plurality of light emitting diodes (LEDs).

10. The IFF device of any of the preceding claims, wherein the plurality of emitters comprises one or more first emitters configured to configured to emit light at a first wavelength and one or more second emitters configured to configured to emit light at a second wavelength.

11. The IFF device of claim 10, wherein the plurality of emitters further comprises one or more third emitters configured to emit light at a third wavelength.

12. The IFF device of claim 11, wherein:
the first wavelength is within a wavelength range corresponding to visible light;
the second wavelength is within a wavelength range corresponding to near infrared (NIR) light; and
the third wavelength is within a wavelength range corresponding to short wave infrared (SWIR) light.

13. The IFF device of claim 11 or claim 12, wherein the plurality of emitters further comprises one or more fourth emitters configured to emit light at a fourth wavelength.

14. The IFF device of claim 13, wherein the fourth wavelength is within a wavelength range corresponding to mid-wave infrared (MWIR) light.

15. The IFF device of any of the preceding claims, wherein the plurality of emitters comprises a plurality or first emitters configured to configured to emit light at a first wavelength, a plurality of second emitters configured to configured to emit light at a second wavelength, and a plurality of third emitters configured to emit light at a third wavelength.

16. The IFF device of any of the preceding claims, wherein the plurality of emitters are spaced about at least a portion of a periphery of the housing to enhance visibility of a wearer of the IFF device from multiple directions.

17. The IFF device of any of the preceding claims, further comprising: an optical sensor configured to detect a presence of a laser beam.

18. The IFF device of claim 17, wherein the plurality of emitters are configured to generate an optical output responsive to detecting the presence of the laser beam.

19. The IFF device of claim 17 or claim 18, further comprising: means for calculating a direction of arrival of the laser beam.

20. The IFF device of claim 19, wherein the direction of arrival is selected from one or both of an azimuth angle and an elevation angle.

21. A kit of components usable together, the kit comprising the IFF device of any of the preceding claims in combination with the helmet-based control system.

22. The kit of claim 21, wherein the helmet-based control system comprises a program of instructions configured for one or more of:
providing an audio warning to a wearer of the IFF device;
communication with an end user device; and
communicate via a satellite radio.
